# EUROPEAN PATENT SPECIFICATION

(11) **EP 2 257 188 B1**
(45) Date of publication and mention of the grant of the patent: **09.09.2015**
(21) Application number: 09715610.3
(22) Date of filing: 19.02.2009
(51) Int. Cl.: A23L 1/09, A23L 1/227

(54) **PROCESS FOR PREPARING A FLAVOURANT**
VERFAHREN ZUR HERSTELLUNG EINES AROMAS
PROCÉDÉ DE PRÉPARATION D'UN ARÔME

(30) Priority: 28.02.2008 GB 0803669
(43) Date of publication of application: 08.12.2010
(73) Proprietor: Oterap Holding B.V., 1507 BR Zaandam (NL)
(72) Inventor: BINK, Gregorio, Exposito, NL-1562 AT Krommenie (NL); TEN-HAAF, Lambert A M, NL-1312 ER Almere (NL)
(74) Representative: Potter Clarkson LLP
(86) International application number: PCT/EP2009/001213
(87) International publication number: WO 2009/106264

(56) References cited:
- WO-A1-2005/096844
- DD-A1- 217 981
- FR-A1- 2 570 932
- JP-A- 8 196 233
- US-A- 4 879 130
- US-A- 4 913 923
- US-A- 5 368 879
- US-A1- 2002 106 425
- DATABASE WPI Week 198229, Derwent Publications Ltd., London, GB; AN 1982-60692E, XP002534234 & JP 57 095904 A (MITSUBISHI CHEM IND LTD) 15 June 1982

## Description

The present invention relates to a process for preparing a flavourant, to a flavourant obtainable by the process and to food products comprising the flavourant.

Flavour is the sensory impression of a food or other substance and is determined mainly by the chemical senses of taste and smell. The flavour of the food, as such, can be altered with natural or artificial flavourants, which create, alter or enhance the flavour or smell of food products.

US 4,874,625 discloses a process for preparing an edible material useful as a flavouring comprising: forming a mixture comprising a protein hydrolysate, a carbohydrate source (preferably of com origin), and a liquid comprised of ethanol and water; and heating the mixture at a temperature and for a time sufficient to increase the absorption by said mixture of visible radiation, i.e., to brown the mixture.

US 5,958,755 relates to flavoured yeast extracts that are prepared by incorporating one or more hydrolysates of fruit, vegetable, herb, spice, fungus or mixtures thereof in a yeast autolysis process.

US 6,562,391 discloses an aroma product containing flavouring compounds and a process for preparing the aroma product

There is a need for a process for preparing flavourants that can be controlled more easily and/or which can be made using an authentic cuisine process, preferably on an industrial scale, without the need for complex equipment. There is also a need for flavourants, preferably natural flavourants, which have improved flavour and colour properties.

In a first aspect of the invention, there is provided a process for preparing a flavourant comprising:
(i) providing a composition comprising a fruit syrup and one or more components selected from the group consisting of hydrolysed vegetable protein, autolysed yeast and fermented soy and/or wheat;
(ii) heating the composition to promote a Maillard reaction; and
(iii) drying the composition

In a second aspect, the invention provides a flavourant obtainable by a process according to the first aspect of the invention.

In a third aspect of the invention, there is provided a food product comprising a flavourant according to the second aspect of the invention.

In a fourth aspect, there is provided a composition for use in a process according to the first aspect comprising:
(i) a fruit syrup; and
(ii) one or more components selected from the group consisting of hydrolysed vegetable protein, autolysed yeast and fermented soy and/or wheat.

In a final aspect, the invention provides the use of a fruit syrup in the preparation of a flavourant according to the second aspect of the invention.

The invention relates to a flavourant. The term "flavourant" as used herein includes compositions that may be used to create, alter or enhance the flavours and/or smell of food products, such as those containing meats and/or vegetables.

The process of the invention comprises:
(i) providing a composition comprising a fruit syrup and one or more components selected from the group consisting of hydrolysed vegetable protein, autolysed yeast and fermented soy and/or wheat;
(ii) heating the composition to promote a Maillard reaction; and
(iii) drying the composition

The composition may take any physical form (e.g., powder or paste) but is preferably in the form of a paste.

In one embodiment, the composition comprises a fruit syrup and one or more components selected from the group consisting of hydrolysed vegetable protein and autolysed yeast.

In another embodiment, the composition comprises a fruit syrup and one or more components selected from the group consisting of fermented soy and fermented wheat.

The process of the invention preferably involves the use of a hydrolysed vegetable protein. The term "hydrolysed protein" has an accepted meaning in the art and generally refers to a composition comprising products of the hydrolysis of protein, optionally together with other components derived from the starting material that is used to form the composition.

The hydrolysed protein is preferably provided for use in the process of the invention in the form of a paste. Pastes will typically comprise water. The hydrolysed protein is a hydrolysed vegetable protein (HVP) (sometimes also referred to as a vegetable protein hydrolysate).

The hydrolysed vegetable protein may be obtained from one or more proteins that are derived from at least one source selected from cereals (or grains) and/or oilseed plants. For example, the hydrolysed protein may be obtained from one or more proteins selected from the group consisting of sunflower protein, maize protein, rape protein, cotton seed protein, wheat protein, soy protein and rice. Preferably, the hydrolysed protein is obtained from at least sunflower protein.

The source of sunflower protein may be any proteinaceous part of a sunflower plant and is preferably sunflower seeds and/or a product or derivative obtained from sunflower seeds. The protein content of the sunflower seeds (or product or derivative thereof) is generally greater than 20%, preferably between 25 and 50% most preferably between 30 and 40% by weight.

Processes for producing hydrolysed proteins are well known in the art. For example, one or more of the proteins may be hydrolysed enzymatically, for example using one or more protease enzymes, or non-enzymatically, for example by acid or base catalysed hydrolysis.

The sunflower protein may undergo one or more processing steps prior to use as a starting material for producing the hydrolysed vegetable protein, such as industrial processing steps. A preferred processing step comprises defatting, namely reducing the fat content of the material. Another optional treatment is hydrolysis by enzymatic or industrial methods. Another preferred processing step comprises reducing the size of the material e.g., by grinding. The most preferred source of the sunflower protein is defatted sunflower seeds.

In a preferred embodiment, the hydrolysed protein is obtained from sunflower protein and at least one other vegetable protein, which may be selected from the group mentioned above. Preferably, the at least one other vegetable protein comprises maize protein. The maize protein preferably has a protein content of 30 to 80 % by weight, such as 50 to 70 % by weight. The maize protein may undergo one or more processing steps, prior to use as starting material for producing the hydrolysed protein, such as industrial processing steps (e.g., defatting and/or hydrolysis and/or grinding), in a similar manner as for sunflower protein.

The weight ratio of sunflower protein to the at least one other vegetable protein (e.g., maize protein) in the mixture that is preferably hydrolysed to produce the hydrolysed vegetable protein is preferably from 95 - 5 to 5 - 95, more preferably from 80 - 20 to 20 - 80, most preferably from 75 - 25 to 25 - 75. Typically, the weight ratio of sunflower protein to the at least one other vegetable protein in the mixture that is hydrolysed to produce the hydrolysed vegetable protein is preferably in the range of from 5:1 to 2:1, such as from 4:1 to 5:2, for example about 3:1. The most preferred weight ratio of sunflower protein to the at least one other vegetable protein in the mixture that is hydrolysed is from 3:1 to 1:1, such as about 2:1.

The hydrolysed protein may preferably be present in the composition in an amount of from 10 to 70% by weight on a dry basis of hydrolysed protein, more preferably from 20 to 60% by weight on a dry basis of hydrolysed protein, most preferably from 30 to 50% by weight on a dry basis of hydrolysed protein. By dry basis we mean weight of the dry hydrolysed protein and weight of the dry composition.

The process preferably involves the use of autolysed yeast (i.e., a yeast extract). The yeast cells for use in the process are preferably from brewer's yeast and/or baker's yeast (e.g., *Saccharomyces cerevisiae)* and/or *Candida utilis* (formerly *Torulopsis utilis, Torula utilis)* or a combination thereof.

Preferably, the autolysed yeast is present in the composition in an amount of from 10 to 70% by weight on a dry basis of autolysed yeast, most preferably from 20 to 60% by weight on a dry basis of autolysed yeast, such as from 30 to 50% by weight on a dry basis of autolysed yeast.

Preferably, the process involves the use of fermented soy and/or wheat (i.e., fermented soy and/or fermented wheat). Preferably, the fermented soy and/or wheat is present in the composition in an amount of from 5 to 70% by weight on a dry basis of fermented soy and/or wheat, most preferably from 20 to 60% by weight on a dry basis of fermented soy and/or wheat, such as from 30 to 50% by weight on a dry basis of fermented soy and/or wheat.

The fermented soy and/or wheat can be provided for use in the process of the present invention in any suitable form such as a powder, paste or liquid.

The invention involves the use of a fruit syrup. The term fruit syrup refers to a liquid comprising water and sugar, which is derived from fruit. Preferably, the fruit syrup is concentrated relative to the juice of the fruit e.g., the concentration of sugars in the fruit syrup is higher than in the fruit and the juice of the fruit. The fruit syrup is typically in the form of a viscous liquid. Preferably, the fruit syrup does not contain any added sugars (i.e., the total sugar content of the fruit syrup is preferably derived from the fruit). The fruit syrup preferably comprises colourants and/or flavourants derived from the fruit.

The fruit syrup may be derived from any fruit or mixture of fruits, such as one or more of the fruits selected from apple, plum, pear, raspberry, apricot, strawberry, fig and date. Preferably, the fruit syrup is derived from one or more of the fruits selected from apple, fig and date. The fruit syrup is most preferably derived from apple.

The fruit syrup typically has the flavour and/or sugar profile corresponding to that of the fruit or mixture of fruit it is obtained from. Thus, the fruit syrup typically comprises the same sugars that naturally occur in the fruit.

The fruit syrup may be extracted from fruit by any conventional means, such as pressing, squeezing or the like. The fruit syrup is preferably obtained from dried and dejuiced fruit(s).

The fruit syrup has a sweetness due to its natural sugar content. The degree of sweetness is generally listed by a brix value. Brix is generally defined as the percent of soluble solids primarily made up of natural sugars. The fruit syrup generally has an overall brix value of from 50 to 90°Bx, such as from 60 to 80°Bx, more preferably from 65 to 75°Bx.

The fruit syrup preferably comprises on a wet basis from 20 to 70% by weight fructose, more preferably from 30 to 60% by weight, such as from 35 to 50% by weight fructose and/or from 20 to 65% by weight glucose, more preferably from 30 to 55% by weight, such as from 35 to 45% by weight glucose. Wet basis refers to the fruit syrup including any water associated with it.

The fruit syrup preferably comprises on a wet basis an amount of at least 1% by weight of sorbitol. Most preferably, the fruit syrup comprises on a wet basis from 2 to 10% by weight, such as from 3 to 6% by weight sorbitol.

The fruit syrup typically has a pH of less than 7, such as a pH from 2 to 6 or from 3 to 5.

Besides the sugars of the fruit (e.g., fructose, glucose and/or sorbitol), the fruit syrup preferably comprises the colouring and/or flavouring components of the fruit. Preferably, one or more of the components selected from added natural fruit acids, minerals and/or secondary plant substances of the fruit, such as polyphenols, are optionally also present in the fruit syrup.

Preferably, the composition comprises from 1.0 to 15.0% by weight on a wet basis of fruit syrup, more preferably, from 1.5 to 10% by weight on a wet basis of fruit syrup, such as from 2 to 5% by weight on a wet basis of fruit syrup. Wet basis refers to the weight of the fruit syrup and the composition including any water associated with each of them.

It has surprisingly been found that the use of a fruit syrup provides an improved process for preparing a flavourant. For example, the process is typically more easily controlled and/or is more stable. Moreover, the flavourant produced preferably has improved flavour properties and/or colour properties compared with flavourants produced by conventional processes known in the art. The use of a fruit syrup is believed to provide significant advantages compared to the use of other materials such as corn syrup. For example, in addition to providing a product with improved flavour, the use of a fruit syrup has been found to aid the process and result in a greater output of the product from the process. Fruit syrups have been found to reduce foaming during the process and this allows a greater amount of the composition to be dried in an oven of a given size. Also, products prepared using fruit syrup have less tendency to stick to the container after drying and so are more easily removed from the container and/or can be removed in a greater amount.

A suitable commercially available preparation of a fruit syrup derived from apple includes, for example, Herbarom AF 01.

Water that is separate from that present in any other component (e.g., the hydrolysed protein and fruit syrup) is preferably added to the composition. Based on the total weight of the composition, water is preferably added in an amount of from 0.5 to 20% by weight, such as from 3 to 15% by weight or from 5 to 10% by weight.

The process of the invention is preferably carried out in the absence of organic solvents such as alcohols e.g., ethanol. Thus, no organic solvent (e.g., ethanol) is preferably present in the composition in (i) and no organic solvent is added during the process.

In a preferred embodiment, the process further comprises adding one or more non-reducing sugars to the composition. A suitable non-reducing sugar includes sucrose. One or more non-reducing sugars may be added to the composition in an amount of from 1 to 20% by weight of the total composition, such as from 5 to 15% by weight of the total composition or from 8 to 12 % by weight of the total composition. Preferably, at least part of the added non-reducing sugar is in the form of liquid burnt sugar. Thus, in a particular embodiment, sucrose (in the form of a crystalline solid) is added to the composition in an amount of from 0.5 to 10% by weight of the total composition (such as from 2 to 7% by weight of the total composition) and/or liquid burnt sugar is added to the composition in an amount of from 0.5 to 10% by weight of the total composition (such as from 2 to 7% by weight of the total composition).

Other components that are also preferably added to the composition include one or more liquid oils, preferably vegetable oils. By vegetable oils, it is meant that the oils are principally or wholly derived from vegetable sources, either directly or indirectly, rather than being derived from animals. Liquid oils may be single oils or mixtures of two or more different oils. Examples of suitable vegetable oils include sunflower oil, high oleic sunflower oil, soybean oil, safflower oil and rapeseed oil and mixtures thereof. Sunflower oil is particularly preferred. Based on the total weight of the composition, a liquid oil or mixture thereof may be added to the composition in an amount of from 0.1 to 10% by weight, such as from 0.5 to 5% by weight or from 1 to 3% by weight.

In a particular embodiment, the process further comprises the addition of one or more further flavour enhancing additives such as tomato puree and/or onion extract.

The composition, which is preferably in the form of a paste, is heated in (ii) to promote the Maillard reaction. Preferably, no enzymes or micro-organisms are added to the composition (reaction mixture) to achieve the Maillard reaction.

The Maillard reaction involves the reaction of a protein and a reducing sugar, usually at elevated temperatures. This reaction, like caramelisation, is a form of non-enzymatic browning.

In a preferred embodiment, (ii) is carried out at a temperature of from 50°C to 150°C, more preferably from 60°C to 120°C, most preferably from 70°C to 110°C and/or at a pressure of from 5 to 400 Mbar, more preferably from 10 to 300 Mbar, most preferably from 20 to 150 Mbar. Heating may be carried out by any suitable technique known in the art. Preferably the composition is heated in an oven, or a heated tank or vessel. Ideally the composition is heated in a vacuum oven.

Step (ii) is typically carried out for a time of from 1 to 9 hours, preferably from 3 to 7 hours, most preferably from 4 to 6 hours.

The process comprises a step (iii) of drying the composition. Drying can be carried out by any suitable technique known in the art, such as spray drying, vacuum oven drying, or freeze drying. Preferably, the composition is dried in an oven, more preferably a vacuum oven. Preferably, steps (ii) and (iii) are carried out simultaneously. Hence, the composition is preferably dried during (ii).

In a particularly preferred embodiment, step (i) comprises providing one or more components selected from the group consisting of hydrolysed vegetable protein, autolysed yeast and fermented soy and/or wheat and blending the one or more components with a fruit syrup.

In one embodiment, therefore, step (i) may comprise providing one or more components selected from the group consisting of hydrolysed protein and autolysed yeast and blending the one or more components with a fruit syrup. In another embodiment, step (i) may comprise providing one or more components selected from the group consisting of fermented soy and fermented wheat and blending the one or more components with a fruit syrup.

The mixture formed by blending is preferably in the form of a paste. Blending is typically carried out for a time of from 5 minutes to 3 hours, more preferably from 15 minutes to 1.5 hours, most preferably from 30 minutes to 1 hour and/or at a temperature of from 20°C to 150°C, such as from 30°C to 130°C, more preferably from 50°C to 120°C, such as from 60°C to 100°C.

Blending may be carried out, in part or in whole, during step (ii). For example, steps (i) and (ii) may be carried out simultaneously. Alternatively, steps (i) and (ii) may be carried out sequentially with step (ii) following step (i).

The pH of the composition is not critical. However, an acidic pH is preferred (for example, the composition may have a pH of from 2 to 7 or from 3 to 6). The pH of the composition may be adjusted by techniques known in the art, for example by the addition of suitable bases or acids.

Preferably, the flavourant produced by the process is in the form of a powder. Preferably, therefore, the process comprises a further step (iv) of grinding the mixture produced in (iii) to form a powder.

After (iii) or (iv), other components of the final flavourant may be combined with the resulting mixture or powder, such as one or more of the flowing additives: thickeners, extenders or carriers, preservatives such as salt (sodium and/or potassium chloride), colourings and, if desired, flavour enhancers such as spices, herbs, natural 5'-ribonucleotides and the like. Alternatively or additionally, one or more of these additives may be combined with the components of the composition prior to or during step (ii). Advantageously, the mixture is blended for a further time after the addition of further additives.

The process of the invention may comprise one or more further steps in addition to those mentioned above.

An advantage of the invention is that the flavourant can be prepared using an authentic cuisine process. In other words, the flavourant can be prepared by mixing the ingredients and drying the mixture in an oven without the need for complex equipment. Furthermore, all of the ingredients of the flavourant are natural ingredients and/or food ingredients.

Another advantage of the present invention is that the flavourant can be prepared on an industrial scale. The process of the invention may be carried out either continuously or batchwise. Preferably, the process is carried out batchwise. The amount of flavourant produced per production run (e.g., in each batch) preferably ranges from 1 kg to 10,000 kg, such as from 100 kg to 5000 kg, more preferably from 500 kg to 4000 kg, such as from 700 kg to 3500 kg or from 1000 to 3000 kg, most preferably from 1500 to 2500 kg. The flavourant is preferably produced in the form of a powder.

The flavourant may preferably be referred to as a natural flavourant. The term natural flavourant includes the essential oil, oleoresin, essence or extractive, protein hydrolysate, distillate, or any product of roasting, heating or enzymolysis, which contains the flavouring constituents derived from a spice, fruit or fruit juice, vegetable or vegetable juice, edible yeast, herb, bark, bud, root, leaf or any other edible portions of a plant, meat, seafood, poultry, eggs, dairy products, or fermentation products thereof, whose primary function in food is flavouring rather than nutritional.

The flavourant obtainable by the process of the invention may take any suitable form and may, for example, be packaged and sold as a powder, liquid or paste. A powder is particularly preferred.

A preferred use of the flavourant of the present invention is as a component of a food product. The invention also contemplates, therefore, a food product comprising the flavourant of the invention.

The food product may be adapted for humans or animals (e.g., cats or dogs). The most preferred food products are savoury products such as instant soups, soups, sauces, meat products (such as pork and beef products), snack foods such as crisps and ready meals such as pasta based meals. The food products will generally comprise one or more further edible components, such as fats (triglycerides) (e.g., in an amount of from 1 % to 50 % by weight) and/or carbohydrates (e.g., in an amount of from 1 % to 50 % by weight), and they may also contain typical components of food products, such as preservatives and/or colouring agents.

The amount of flavourant incorporated in a food product will be dependent upon the specific application. Generally, a food product may comprise from 0.05 to 10% by weight of the flavourant of the present invention. The flavourant preferably imparts a cooked flavour (e.g., a roasted, boiled or baked flavour) to the food product. Most preferably, the flavourant imparts a cooked meat flavour, such as cooked pork or cooked beef flavour to the food product. The flavourant preferably imparts a savoury flavour.

In the fourth aspect of the invention, there is provided a composition for use in a process according to the first aspect of the invention comprising:
(i) a fruit syrup; and
(ii) one or more components selected from the group consisting of hydrolysed vegetable protein, autolysed yeast and fermented soy and/or wheat.

Thus, the composition is suitable for use in the preparation of the flavourant of the invention. Preferred features of the composition are as described above in the relation to the composition described in the first aspect of the invention.

In the final aspect, the invention provides the use of a fruit syrup in the preparation of a flavourant according to the invention. In a particularly preferred embodiment, the invention provides the use of a composition comprising:
(i) a fruit syrup; and
(ii) one or more components selected from the group consisting of hydrolysed vegetable protein, autolysed yeast and fermented soy and/or wheat,
in the preparation of the flavourant.

Preferred features of the fruit syrup and the composition are as described above in relation to the first aspect of the invention.

The listing or discussion of an apparently prior-published document in this specification should not necessarily be taken as an acknowledgement that the document is part of the state of the art or is common general knowledge.

The following non-limiting examples illustrate the invention and do not limit its scope in any way. In the examples and throughout this specification, all percentages, parts and ratios are by weight unless indicated otherwise.

### Examples

### Example 1

In this example, a beef type flavourant is prepared.

The flavourant is prepared by blending the following components:

| **Ingredient** | **wt%** |
|---|---|
| Hydrolysed vegetable protein | 40.0 |
| Yeast paste | 27.0 |
| L-Cysteine (natural) | 3.0 |
| Tomato puree | 2.5 |
| Onion extract | 2.5 |
| Sugar | 5.0 |
| Sunflower oil | 1.9 |
| Water | 7.0 |
| Liquid burnt sugar | 4.5 |
| Apple syrup | 3.0 |
| Hydroxide | 3.5 |
| Others | 0.1 |

### Processing:

The composition is blended at a temperature of from 60°C to 120°C. The product (paste) is filled on plates or trays (minimum 4kg per plate; maximum 8 kg per plate). The plates are placed in a vacuum oven for drying. Drying is carried out for a time of from 3 hours to 8 or 9 hours, at a temperature of from 60°C to 120°C and at a pressure of from 10 Mbar to 300 Mbar. The resulting product is cooled and then powdered.

### Example 2

Flavourants were prepared according to the invention using apple syrup and were compared to otherwise identical flavourants prepared using glucose syrup instead of apple syrup. In each case, three flavourants were prepared - containing 3 %, 6 % and 9% by weight of the respective syrup. The syrups used had a Brix value of 75°.

The formulations of the products were as follows:

### basic recipe 3% glucose or apple syrup

| | % |
|---|---|
| yeast paste | 17,2 |
| HVP paste | 18,8 |
| L-cysteine | 2,0 |
| Sugar | 5,0 |
| Anti-foam | 0,1 |
| Vegetable oil | 1,9 |
| yeast powder | 15,6 |
| water | 7,3 |
| HVP powder | 16,9 |
| Apple syrup or Glucose syrup | 3,0 |
| Sodium hydroxide | 3,5 |
| Maltodextrin | 8,7 |
| | 100,0 |

### basic recipe 6% glucose or apple syrup

| | % |
|---|---|
| yeast paste | 16,7 |
| HVP paste | 18,2 |
| L-cysteine | 1,9 |
| Sugar | 4,9 |
| Anti-foam | 0,1 |
| Vegetable oil | 1,8 |
| Yeast powder | 15,1 |
| Water | 7,1 |
| HVP powder | 16,3 |
| Apple syrup or Glucose syrup | 6,0 |
| Sodium hydroxide | 3,4 |
| Maltodextrin | 8,5 |
| | 100,0 |

### basic recipe 9% glucose or apple syrup

| | % |
|---|---|
| yeast paste | 16,1 |
| HVP paste | 17,8 |
| L-cysteine | 1,9 |
| Sugar | 4,7 |
| Anti-foam | 0,1 |
| Vegetable oil | 1,8 |
| yeast powder | 14,6 |
| water | 6,8 |
| HVP powder | 15,8 |
| Apple syrup or Glucose syrup | 8,9 |
| Sodium hydroxide | 3,3 |
| Maltodextrin | 8,2 |
| | 100,0 |

The flavourants were prepared by blending the above formulations to form a paste, oven drying and grinding.

During production of the flavourants, it was noted that the products prepared using apple syrup had less foaming than the corresponding products containing glucose syrup. This lower foaming has the advantage of allowing greater filling of containers before oven drying. Also, the flavourants based on apple syrup stuck less to the containers than the glucose syrup allowing a cleaner removal of the product and a correspondingly increased yield.

The flavourants were dissolved in water to form a 1 % by weight solution and were evaluated by a taste panel of five experienced pannellists. The results were as follows:

| Sample | Syrup | Summary of comments on flavour | Taste ranking* |
|---|---|---|---|
| 1 | 3 % apple | Soft | 4-5 |
| 2 | 6 % apple | Soft, balanced | 3-4 |
| 3 | 9 % apple | Bitter, meaty | 3-4 |
| 4 | 3 % glucose | Bitter, sour | 2-3 |
| 5 | 6 % glucose | Bitter | 1 |
| 6 | 9 % glucose | Burned | 1 |

| | | | |
|---|---|---|---|
| * taste ranking scale, 1 = very poor; 5 = very good | | | |

The products of the invention derived from apple syrup had good overall flavour with a meaty and good all-round taste and did not give excessively bitter or burned flavour notes until used in higher amounts.

The comparative products derived from glucose syrup were overall more bitter with burned flavour notes even at the lowest level used.

The product of the invention was better tasting product and could be more easily produced in a higher yield.

## Claims

1. A process for preparing a flavourant comprising:
(i) providing a composition comprising a fruit syrup and one or more components selected from the group consisting of hydrolysed vegetable protein, autolysed yeast and fermented soy and/or wheat;
(ii) heating the composition to promote a Maillard reaction; and
(iii) drying the composition.

2. The process according to Claim 1, wherein the composition comprises a fruit syrup and one or more components selected from the group consisting of hydrolysed vegetable protein and autolysed yeast or the group consisting of fermented soy and fermented wheat.

3. The process according to Claim 1 or Claim 2, wherein the composition is provided in the form of a paste.

4. The process according to any one of the preceding claims, wherein the fruit syrup is derived from apple.

5. The process according to any one of the preceding claims, wherein the hydrolysed vegetable protein is obtained from at least sunflower protein and/or the autolysed yeast comprises *Saccharomyces cerevisiae, Candida utilis* or a combination thereof.

6. The process according to any one of the preceding claims, wherein the composition comprises: from 10 to 70% by weight on a dry basis of hydrolysed vegetable protein; and/or from 10 to 70% by weight on a dry basis of autolysed yeast; and/or from 5 to 70% by weight on a dry basis of fermented soy and/or wheat; and/or from 1.0% to 15.0% by weight on a wet basis of fruit syrup.

7. The process according to any one of the preceding claims, wherein (ii) is carried out at a temperature of from 50°C to 150°C and/or at a pressure of from 5 to 400 Mbar and/or for a time of from 1 to 9 hours and/or in an oven.

8. The process according to any one of the preceding claims, wherein steps (ii) and (iii) are carried out simultaneously.

9. The process according to any one of the preceding claims, wherein (i) comprises providing one or more components selected from the group consisting of hydrolysed vegetable protein, autolysed yeast and fermented soy and/or wheat and blending the one or more components with a fruit syrup, wherein blending is preferably carried out for a time of from 5 minutes to 3 hours and/or at a temperature of from 20°C to 150°C.

10. The process according to any one of the preceding claims, wherein the flavourant is in the form of a powder.

11. A flavourant obtainable by a process according to any one of Claims 1 to 10.

12. Food product comprising a flavourant according to Claim 11, preferably selected from the group consisting of soups, sauces, meat products, crisps and pasta based meals.

13. A composition for use in a process according to any one of Claims 1 to 10 comprising:
(i) a fruit syrup; and
(ii) one or more components selected from the group consisting of hydrolysed vegetable protein, autolysed yeast and fermented soy and/or wheat.

14. Use of a fruit syrup in the preparation of a flavourant according to Claim 11.

## Patentansprüche

1. Verfahren zum Herstellen eines Aromastoffs, Folgendes umfassend:
(i) Bereitstellung einer Zusammensetzung, die einen Sirup und einen oder mehrere Bestandteile aufweist, die aus der Gruppe bestehend aus hydrolysiertem Pflanzeneiweiß, autolysierter Hefe und fermentiertem Soja und/oder Weizen ausgewählt sind;
(ii) Erhitzen der Zusammensetzung, um eine Maillard-Reaktion zu unterstützen; und
(iii) Trocknen der Zusammensetzung.

2. Verfahren nach Anspruch 1, wobei die Zusammensetzung einen Fruchtsirup und einen oder mehrere Bestandteile aufweist, die aus der Gruppe bestehend aus hydrolysiertem Pflanzeneiweiß und autolysierter Hefe oder aus der Gruppe bestehend aus fermentiertem Soja und fermentiertem Weizen ausgewählt sind.

3. Verfahren nach Anspruch 1 oder Anspruch 2, wobei die Zusammensetzung in Form einer Paste bereitgestellt wird.

4. Verfahren nach einem der vorhergehenden Ansprüche, wobei der Fruchtsirup aus Äpfeln stammt.

5. Verfahren nach einem der vorhergehenden Ansprüche, wobei das hydrolysierte Pflanzeneiweiß wenigstens aus Sonnenblumeneiweiß stammt und/oder die autolysierte Hefe *Saccharomyces cerevisiae, Candida utilis* oder einen Kombination daraus enthält.

6. Verfahren nach einem der vorhergehenden Ansprüche, wobei die Zusammensetzung Folgendes umfasst: 10 bis 70 Gew.-% hydrolysiertes Pflanzeneiweiß auf Trockenbasis; und/oder 10 bis 70 Gew.-% autolysierte Hefe auf Trockenbasis; und/oder 5 bis 70 Gew.-% fermentiertes Soja und/oder Weizen auf Trockenbasis; und/oder 1,0 bis 15,0 Gew.-% Fruchtsirup auf feuchter Basis.

7. Verfahren nach einem der vorhergehenden Ansprüche, wobei (ii) bei einer Temperatur von 50 °C bis 150 °C und/oder bei einem Druck von 5 bis 400 Mbar und/oder über einen Zeitraum von 1 bis 9 Stunden und/oder in einem Ofen ausgeführt wird.

8. Verfahren nach einem der vorhergehenden Ansprüche, wobei die Schritte (ii) und (iii) gleichzeitig ausgeführt werden.

9. Verfahren nach einem der vorhergehenden Ansprüche, wobei (i) Folgendes umfasst: Bereitstellen eines oder mehrerer Bestandteile, die aus der Gruppe bestehend aus hydrolysiertem Pflanzeneiweiß, autolysierter Hefe und fermentiertem Soja und/oder Weizen ausgewählt sind und Mischen des einen oder der mehreren Bestandteile mit einem Fruchtsirup, wobei das Mischen vorzugsweise über einen Zeitraum von 5 Minuten bis 3 Stunden und/oder bei einer Temperatur von 20 °C bis 150 °C ausgeführt wird.

10. Verfahren nach einem der vorhergehenden Ansprüche, wobei der Aromastoff in Form eines Pulvers vorliegt.

11. Aromastoff, der aus einem Verfahren nach einem der Ansprüche 1 bis 10 zu erhalten ist.

12. Nahrungsmittelprodukt, das einen Aromastoff nach Anspruch 11 aufweist, vorzugsweise ausgewählt aus der Gruppe bestehend aus Suppen, Saucen, Fleischprodukten, Chips und Gerichten auf Nudelbasis.

13. Zusammensetzung zur Verwendung in einem Verfahren nach einem der Ansprüche 1 bis 10, Folgendes umfassend:
(i) einen Fruchtsirup; und
(ii) einen oder mehrere Bestandteile, die aus der Gruppe bestehend aus hydrolysiertem Pflanzeneiweiß, autolysierter Hefe und fermentiertem Soja und/oder Weizen ausgewählt sind.

14. Verwendung eines Fruchtsirups beim Herstellen eines Aromastoffs nach Anspruch 11.

## Revendications

1. Procédé de préparation d'un agent aromatisant comprenant :
(i) la fourniture d'une composition comprenant un sirop de fruit et un ou plusieurs composants choisis dans le groupe consistant en une protéine végétale hydrolysée, une levure autolysée et du soja et/ou du blé fermenté ;
(ii) le chauffage de la composition pour favoriser une réaction Maillard ; et
(iii) le séchage de la composition.

2. Procédé selon la revendication 1, dans lequel la composition comprend un sirop de fruit et un ou plusieurs composants choisis dans le groupe consistant en une protéine végétale hydrolysée et de la levure autolysée ou le groupe consistant en le soja fermenté et le blé fermenté.

3. Procédé selon la revendication 1 ou la revendication 2, dans lequel la composition est fournie sous la forme d'une pâte.

4. Procédé selon l'une quelconque des revendications précédentes, dans lequel le sirop de fruit est dérivé de la pomme.

5. Procédé selon l'une quelconque des revendications précédentes, dans lequel la protéine végétale hydrolysée est obtenue à partir d'au moins une protéine de tournesol et/ou la levure autolysée comprend *Saccharomyces cerevisiae, Candida utilis* ou une combinaison de celles-ci.

6. Procédé selon l'une quelconque des revendications précédentes, dans lequel la composition comprend : de 10 à 70 % en poids sur une base sèche de protéine végétale hydrolysée ; et/ou de 10 à 70 % en poids sur une base sèche de levure autolysée ; et/ou de 5 à 70 % en poids sur une base sèche de soja et/ou blé fermenté ; et/ou de 1,0 % à 15,0 % en poids sur une base humide de sirop de fruit.

7. Procédé selon l'une quelconque des revendications précédentes, dans lequel (ii) est réalisé à une température de 50 °C à 150 °C et/ou à une pression de 5 à 400 Mbar et/ou pendant une durée de 1 à 9 heures et/ou dans un four.

8. Procédé selon l'une quelconque des revendications précédentes, dans lequel les étapes (ii) et (iii) sont réalisées simultanément.

9. Procédé selon l'une quelconque des revendications précédentes, dans lequel (i) comprend la fourniture d'un ou plusieurs composants choisis dans le groupe consistant en une protéine végétale hydrolysée, de la levure autolysée et du soja et/ou du blé fermenté et le mélange des un ou plusieurs composants avec un sirop de fruit, dans lequel le mélange est réalisé de préférence pendant une durée de 5 minutes à 3 heures et/ou à une température de 20 °C à 150 °C.

10. Procédé selon l'une quelconque des revendications précédentes, dans lequel l'agent aromatisant est sous la forme d'une poudre.

11. Agent aromatisant pouvant être obtenu par un procédé selon l'une quelconque des revendications 1 à 10.

12. Produit alimentaire comprenant un agent aromatisant selon la revendication 11, de préférence choisi dans le groupe consistant en les soupes, les sauces, les produits carnés, les chips et les plats à base de pâte.

13. Composition à utiliser dans un procédé selon l'une quelconque des revendications 1 à 10, comprenant :
(i) un sirop de fruit ; et
(ii) un ou plusieurs composants choisis dans le groupe consistant en une protéine végétale hydrolysée, une levure autolysée et du soja et/ou blé fermenté.

14. Utilisation d'un sirop de fruit dans la préparation d'un agent aromatisant selon la revendication 11.
